# EUROPEAN PATENT SPECIFICATION

(11) **EP 1 053 428 B1**
(45) Date of publication and mention of the grant of the patent: **30.06.2004**
(21) Application number: 99909421.2
(22) Date of filing: 01.02.1999
(51) Int. Cl.: F16L 9/18, F16L 21/00

(54) **PIPE SECTION AND TOOL FOR MANUFACTURING THEREOF**
ROHRTEIL UND VORRICHTUNG FÜR SEINE HERSTELLUNG
TRONCON DE TUYAU ET OUTIL DE FABRICATION CORRESPONDANT

(30) Priority: 06.02.1998 NO 980514
(43) Date of publication of application: 22.11.2000
(73) Proprietor: Pipelife Norge AS, 6650 Surnadal (NO)
(72) Inventor: MAUTE, Kurt, Per, N-7125 Vanvikan (NO)
(74) Representative: Dealtry, Brian
(86) International application number: PCT/NO1999/000028
(87) International publication number: WO 1999/040353

(56) References cited:
- GB-A- 2 290 848
- SE-B- 447 013
- US-A- 4 096 887
- US-A- 4 236 953
- US-A- 4 344 461
- US-A- 5 099 888

## Description

The present invention concerns a pipe fitting and a tool for manufacturing same, according to the introductory part of the independent claims.

In contrast to conventional pipes having solid walls with both a smooth inner and outer surface, so called "structured-wall" piping system have a smooth inner wall, while the outer wall is built using stiff rings which form visible flanges and steps.

Pipes designed with a smooth inner wall, and a corrugated or ribbed outer wall have economical material usage, but also have a greater total wall thickness, and thus less inner diameter.

In order to achieve a smooth internal pipe surface and avoid inner steps in such a piping system, the inner diameter of the pipe fittings of the system (bends, branch pipes, etc.) and pipes in each dimension class should be approximately the same size. Thus, pipe fittings of structured-wall pipes will also have a comparatively large total wall thickness.

For efficiency, it is desirable that pipe fittings can be injection moulded; to accurately control the geometry of the parts. They should be formed in a casting mould comprising two halves which form the external shape of the cast, and retractable cores forming the bore inside of the fitting parts.

Thick, solid walls are not compatible by using injection moulding technique, as they give a low production rate and high material usage. There is also an increased risk of product defects, (depressions and ovality) due to insufficient cooling time in injection moulding.

Pipe fittings for systems of structured-wall pipes can be injection moulded with ribs so that a sufficient total wall profile height is achieved, but without too large local wall thickness.

With this kind of rib design, it is necessary to omit a conventional sealing system such as a rubber ring in a groove near the socket mouth, because no smooth spigot end exists for sealing against. Instead, a sealing ring sits between the two outermost profiles of the spigot end of the pipe or the pipe fitting, so that the sealing ring seals against the socket wall almost only down by terminal edge of the socket.

In many cases. it is necessary that the spigot end is smooth both internally and externally, so that conventional sealing systems also can be used. The pipe fitting should then be injection moulded with a normal thin walled spigot end which inevitably gives a larger inner diameter at the spigot end than in the rest of the piping system. Then internal steps are formed in the assembled pipe line.

An example of a conduit which is injection moulded is disclosed in US 4096887.

In US 4096887, the conduit has a main body having a spigot end and a socket end. The main body located between the spigot and socket ends is provided with a plurality of externally projecting ribs which act to reinforce the wall of the main body.

It is thus an object of the present invention to provide a pipe fitting having a spigot end that is not solid, but has smooth inner wall and outer wall, and that has a total wall thickness corresponding to a structured-wall pipe. It is also an object to provide a tool for the manufacture of such a pipe fitting.

The object of the invention is achieved with a pipe fitting and tool, respectively, according to the characterizing part of the independent claims. Further features are clear from the dependent claims.

According to the present invention, it is possible to inject pipe fittings with a ribbed socket and a ribbed main body, but with an external (and internal) smooth spigot end, with local wall thicknesses that are favourable for injection moulding and material usage.

Furthermore, according to present invention, it is made possible to injection mould pipe fittings having a spigot end designed with two or more relatively thin concentrical pipes, between which walls are extending parallel to the axis of the spigot evenly distributed around and normal to the circumference of the pipe.

The spigot end is preferably terminated in a bevel so that it is easier to push it into a socket having a sealing ring in a groove near the socket mouth. The cavities in the spigot end (between the walls) will be visible when viewing into the spigot. In the transition zone between the ribbed main body of the fitting and the smooth spigot end, the cavity is covered by a wall perpendicular to the axis of the spigot end.

In the following, the invention is described in more detail by means of an example of an embodiment and with reference to enclosed drawings, where
Fig. 1 shows a partly sectioned illustration of a pipe fitting manufactured according to present invention,
Fig. 2 shows the pipe fitting of Fig. 1, seen from the spigot end, and

Fig. 3 shows details of a casting tool having casting cores for the spigot end and for the socket end, partly sectioned.

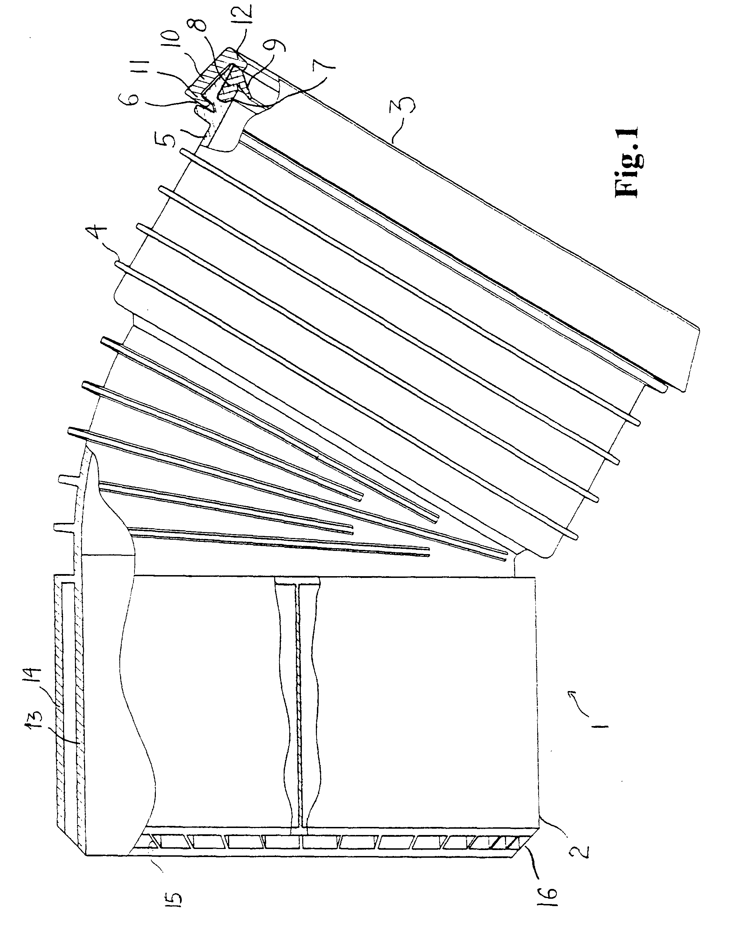

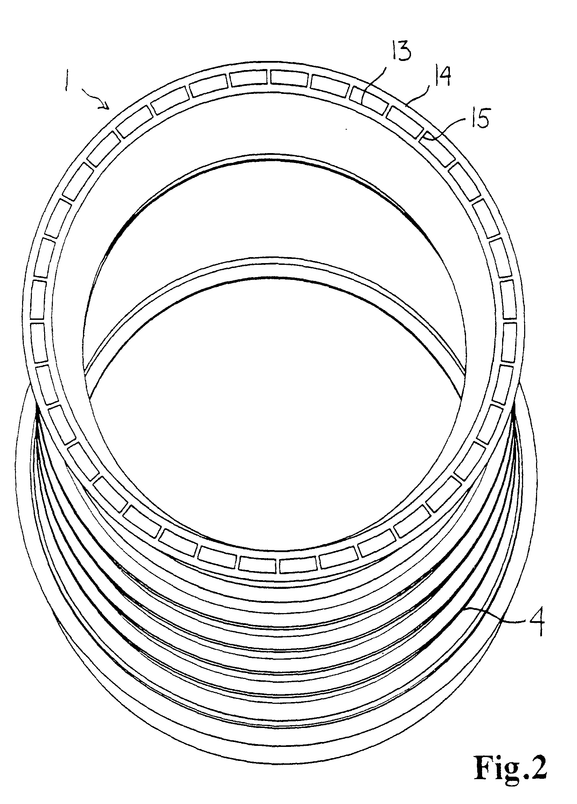

In Fig. 1 and 2 is shown a pipe fitting 1 formed as a bend. The pipe fitting 1 has a first end, or spigot end 2, and a second end, or socket end 3. The pipe fitting 1 is in a per se known manner, provided with ribs 4 extending peripherally on the main body and the socket end. Furthermore, the socket end 3 is formed in a per se known manner with a socket mouth 5 which is provided with a first, outer recess 6 and a second, inner recess 7. The inner recess 7 is arranged for receiving a sealing ring 8, having an inner extending lip 9. The outer recess 6 is arranged for receiving a so called click ring 10, also previously known. The click ring 10 has a first internal flange 11 which fits in the outer recess 6, and a second internal flange 12 which is arranged to bias the sealing ring 8. It is also possible that other alternative sealing means can be incorporated into the socket end 3.

The spigot end 2 comprises an inner wall 13 and an outer wall 14. Between inner wall 13 and outer wall 14 is a distance means, in the form of partition walls 15 arranged parallel to the axis of spigot end 2. Preferably, inner wall 13, the partition walls 15 and the outer wall 14 terminate in a bevel 16, to ease introduction of the spigot end 2 into a corresponding socket.

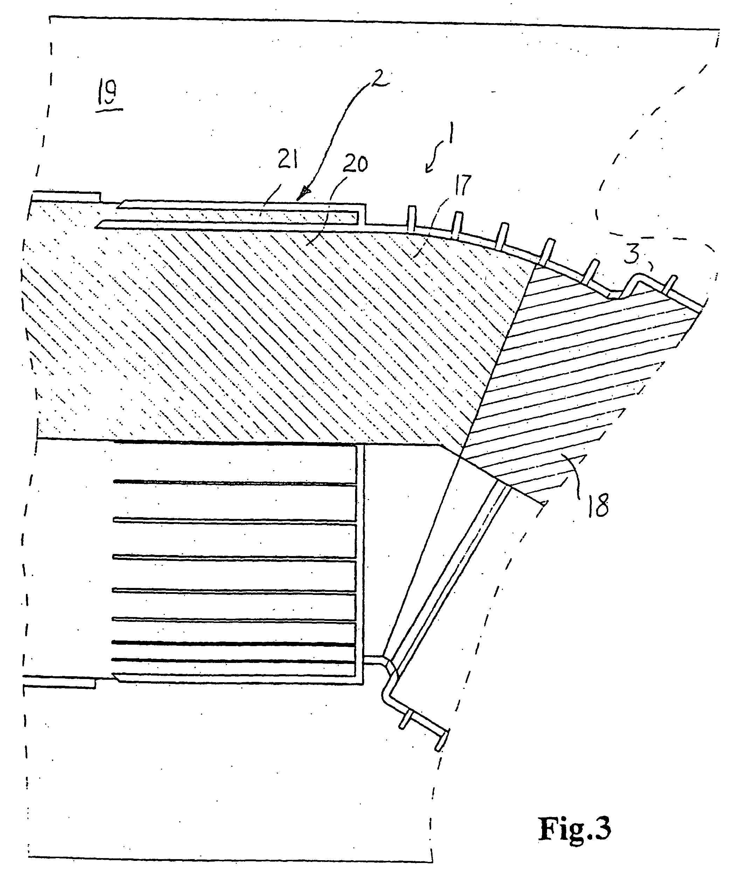

In order for the sealing ring 8 not to be dislodged or damaged during assembly of the spigot end 2 into a socket end 3, the bevel 16 is preferably formed without sharp edges in places that can come in contact with the sealing ring 8 during the joining operation. Manufacture of the pipe fitting 1 is by injection moulding using an injection mould with two cores. This will be described in the following with reference to Fig. 3.

Fig. 3 shows a section of the casting tool 19, with a first casting core 17 for the spigot end 2 and a second casting core 18 for the socket end 3. The separation plane between the casting cores 17, 18 is situated so that both cores easily can be withdrawn from the mould after the casting is completed.

The first casting core 17 comprises an inner element 20 having an outer shape corresponding to the desired inner shape of the spigot end 2 of the pipe fitting 1. Furthermore tongues or fingers 21 are situated parallel to the axis of the pipe fitting 1.

During manufacture, the casting cores 17, 18 will be arranged inside the casting tool 19 and the cavities thus formed will be filled with molten plastics. When the plastic has hardened the casting tool 19 is opened, and the cores 17, 18 are drawn out in directions parallel with their respective axis.

The fact that the spigot end 2 is made hollow with axial walls 15 will in most cases give a lower ring stiffness compared with a corresponding spigot end with circular ribs perpendicularly to the axis of the spigot end. However, functionally, the only requirement is that in the area where socket end 3 and spigot end 2 overlap, the resulting ring stiffness shall be at least as stiff as the ring stiffness of the pipe itself. Also the main part of the pipe fitting , should at least have this stiffness. The spigot end 2 can thus be made weaker than the rest of the pipe fitting, if the socket end 3 encircling it is so stiff that the sum of the ring stiffnesses for the socket end 3 and the spigot end 2 is sufficiently large.

It is also possible that the outer pipe 14 of the spigot end 2 can be integrated with some kind of bendable mantle with a slight elongation (not shown). This mantle can in an additional process step after the injection moulding be hot formed, so that it covers the end of the walls 15 of the spigot end 2, and thus protects the sealing ring in the socket end 3 into which the spigot end 2 is located.

The present invention will also be very useful in connection with the manufacture of pipe fittings which can be used as transitions between piping systems having differences in wall thicknesses. An example could be transition from concrete pipes to plastics pipes, as the plastics pipes usually have thinner walls than the concrete pipes.

## Claims

1. Pipe fitting (1) comprising a spigot end (2), a socket end (3) and a main body between the spigot end and the socket end, which pipe fitting is to be manufactured by injection moulding with external annular ribs (4) extending peripherally on the main body and the socket end (3) wherein the spigot end (2) has a smooth, inner wall (13) and a total wall thickness equal to the wall rib height of the adjoining main body of the pipe fitting,
**characterized in that**
the spigot end (2) is moulded with a smooth outer wall (14) which is connected with the inner wall (13) through axial and radial walls (15) extended over the spigot end.

2. Pipe fitting according to Claim 1,
**characterized in that** the inner wall (13), the axial and radial walls (15) and the outer wall (14) are terminated in a bevel (16).

3. Pipe fitting according to Claim 1,
**characterized in that** the outer wall (14) of the spigot end (2) by injection moulding is extending axially over the inner wall, so that it subsequently can be bent to cover the ends of the axial and radial walls (15) of the spigot end (2).

## Patentansprüche

1. Rohr-Anschlussstück bzw. Fitting (1) mit einem Zapfenende (spigot end) (2) und einem Muffenende (3) und einem Hauptkörper zwischen dem Zapfenende und dem Muffenende, wobei das Rohr-Anschlussstück durch Spritzgießen mit äußeren, sich umfangsmäßig an dem Hauptkörper und dem Muffenende (3) erstreckenden ringförmigen Rippen (4) herzustellen ist, wobei das Zapfenende (2) eine glatte Innenwand (13) und eine Gesamt-Wandstärke gleich der Wand-Rippenhöhe des angrenzenden Hauptkörpers des Rohr-Anschlussstücks aufweist,
**dadurch gekennzeichnet, dass**
das Zapfenende (2) mit einer glatten Außenwand (14) geformt ist, die mit der Innenwand (13) durch sich über dem Zapfenende erstreckende axiale und radiale Wände (15) verbunden ist.

2. Rohr-Anschlussstück bzw. Fitting nach Anspruch 1,
**dadurch gekennzeichnet, dass** die Innenwand (13), die axialen und radialen Wände (15) und die Außenwand (14) in einer konischen Abschrägung (16) enden.

3. Rohr-Anschlussstück bzw. Fitting nach Anspruch 1,
**dadurch gekennzeichnet, dass** sich die Außenwand (14) des spritzgegossenen Zapfenendes (2) axial über der Innenwand derart erstreckt, dass sie anschließend gebogen bzw. abgeknickt werden kann, um die Enden der axialen und radialen Wände (15) des Zapfenendes (2) zu bedecken.

## Revendications

1. Raccord de tuyauterie (1), comprenant une extrémité à emboîtement mâle (2), une extrémité à emboîtement femelle (3) et un corps principal, entre l'extrémité à emboîtement mâle et l'extrémité à emboîtement femelle, ledit raccord de tuyauterie devant être fabriqué par moulage par injection, avec des nervures annulaires (4) extérieures s'étendant en périphérie sur le corps principal et l'extrémité à emboîtement femelle (3), dans lequel l'extrémité d'emboîtement mâle (2) présente une paroi intérieure (13) lisse et une épaisseur de paroi totale égale à la hauteur de nervure de paroi du corps principal adjacent du raccord pour tuyau,
**caractérisé en ce que** l'extrémité d'emboîtement mâle (2) est moulée avec une paroi extérieure (14) lisse, reliée à la paroi intérieure (13), par des parois axiales et radiales (15), s'étendant sur l'extrémité mâle.

2. Raccord pour tuyau selon la revendication 1, **caractérisé en ce que** la paroi intérieure (13), les parois axiales et radiales (15) et la paroi extérieure (14) sont terminées par un chanfrein (16).

3. Raccord pour tuyau selon la revendication 1, **caractérisé en ce que** la paroi extérieure (14) de l'extrémité d'emboîtement mâle (2), obtenu par moulage par injection, s'étend axialement sur la paroi intérieure, de manière à pouvoir être subséquemment coudée pour couvrir des extrémités des parois axiales et radiales (15) de l'extrémité d'emboîtement mâle (2).
